Europäisches Patentamt

European Patent Office

Office européen des brevets

(19)

(11) Veröffentlichungsnummer: **0 197 060**
**B1**

(12) # EUROPÄISCHE PATENTSCHRIFT

(45) Veröffentlichungstag der Patentschrift:
**10.05.89**

(21) Anmeldenummer: **85904618.7**

(22) Anmeldetag: **06.09.85**

(86) Internationale Anmeldenummer:
**PCT/EP 85/00451**

(87) Internationale Veröffentlichungsnummer:
**WO 86/01739 (27.03.86 Gazette 86/07)**

(51) Int. Cl.⁴: **B 01 D 45/08**, B 01 D 45/10

(54) **VORRICHTUNG ZUM ABSCHEIDEN VON FLÜSSIGKEITSTROPFEN AUS DEM GASSTROM EINES LOTRECHTEN STRÖMUNGSROHRES.**

(30) Priorität: **18.09.84 DE 3434133**

(43) Veröffentlichungstag der Anmeldung:
**15.10.86 Patentblatt 86/42**

(45) Bekanntmachung des Hinweises auf die Patenterteilung:
**10.05.89 Patentblatt 89/19**

(84) Benannte Vertragsstaaten:
**AT BE CH FR GB IT LI LU NL SE**

(56) Entgegenhaltungen:
**FR-A-2 214 500**
**NL-C-23 564**
**US-A-2 143 191**
**US-A-3 870 487**
**US-A-4 198 215**

(73) Patentinhaber: **GESELLSCHAFT FÜR VERFAHRENSTECHNIK MBH & CO. KG, Bassfeldshof 4-6, D-4220 Dinslaken (DE)**

(72) Erfinder: **BULANG, Siegfried, Drievogelstraat 177, NL- Kerkrade (NL)**

(74) Vertreter: **Ackmann, Günther, Dr.- Ing., Claubergstrasse 24 Postfach 10 09 22, D-4100 Duisburg 1 (DE)**

EP 0 197 060 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft eine Vorrichtung zum Abscheiden von Flüssigkeitstropfen aus dem Gasstrom eines lotrechten Strömungsrohres, insbesondere eines Gaswäschers von Rauchgasentschwefelungsanlagen, bestehend aus baugruppenartig zusammengefaßten Abscheiderlamellen, die an einem Rahmen zwischen zwei Trägerplatten parallel und mit Abstand voneinander schräg im Strömungsrohr angebracht sind und wobei die Baugruppen in mehreren parallelen Reihen angeordnet und mit Spülrohren versehen sind.

Zum Abscheiden von Flüssigkeitstropfen aus strömenden Gasen finden in ein Strömungsrohr eingebaute Abscheiderplatten Verwendung, die in Abhängigkeit von der Strömungsrichtung verschieden ausgebildet sind. Bei einer horizontalen Anordnung des Strömungsrohres finden gewellte Abscheiderplatten Anwendung, die im Strömungsrohr über einem Siebboden o. dgl. mit Abstand voneinander stehend angeordnet sind und eine Vielzahl gekrümmter Strömungskanäle bilden und die für eine verbesserte Tropfenabscheidung auch mit Fangnasen, Fangrinnen o. dgl. versehen sein können (DE-C-257 368, 3 103 524); die abgeschiedenen Flüssigkeitstropfen fließen nach unten. Bei einer entsprechenden Ausbildung der Abscheiderplatten ist diese Ausführung für ein weites Tropfenspektrum geeignet. Hingegen finden zum Abscheiden von Flüssigkeitstropfen aus vertikalen Gasströmen winkelartig ausgebildete Abscheiderplatten Verwendung, die jedoch leicht zum Abriß des Flüssigkeitsfilms neigen und nur für ein relativ schmales Tropfenspektrum geeignet sind (DE-C-2 246 475).

Weiterhin sind aus Power, March 1984, 35 - 37 für den Einbau in Gaswäscher von Rauchgasentschwefelungsanlagen flache Abscheiderlamellen bekannt, die gegenüber der Horizontalebene geneigt angeordnet sind, wobei jeweils zwei benachbarte Reihen satteldachförmig liegen. Bei dieser Ausführung ist das erfaßbare Tropfenspektrum besonders schmal und läßt sich auch durch eine kostspielige mehretagige Anordnung von Abscheidern nicht wesentlich verbessern. Ein weiterer Nachteil besteht darin, daß die durch eine Entschwefelungsanlage geleiteten Rauchgase erhöhte Mengen an Staub enthalten, die sich ständig an den Abscheiderplatten bzw. -lamellen festsetzen und schon nach kurzer Zeit zu einer erheblichen Verringerung des Strömungsquerschnitts sowie zu einer Beeinträchtigung der Abscheideleistung führen. Deshalb ist während des Betriebes ein häufiges Abspülen der Abscheiderlamellen mit Spülwasser erforderlich. Das periodisch eingespritzte Spülwasser schmälert jedoch die Tropfenabscheidung während des Spülvorgangs ganz erheblich.

Demgegenüber liegt der Erfindung die Aufgabe zugrunde, eine Vorrichtung der gattungsgemäßen Art derart auszubilden, daß die Abscheideleistung verbessert wird und auch während des Spülvorgangs erhalten bleibt.

Diese Aufgabe wird erfindungsgemäß dadurch gelöst, daß neben den unteren Enden der gewellt ausgebildeten Abscheiderlamellen je eine leicht geneigte Sammelrinne vorgesehen ist.

Die Verwendung gewellter Abscheiderlamellen hat zunächst den Vorteil, daß auch bei einer vertikalen Gasströmung ein breites Tropfenspektrum erfaßt wird, wie es mit den entsprechend gewellten und mit Fangnasen und Fangrinnen versehenen Abscheiderlamellen in horizontal durchströmten Rohren o. dgl. der Fall ist. Die neben den Abscheiderlamellen befindlichen Sammelrinnen dienen dem Auffangen der während des Spülvorganges mitgerissenen Spülwassertropfen, die gewissermaßen schräg nach oben aus den Abscheiderlamellen herausgeschleudert werden und durch Schwerkraft sowie entgegen der Gasströmung bogenförmig in die Sammelrinnen herabfallen. Durch die leichte Neigung, die etwa 2 bis 5° betragen kann, fließt das sich ansammelnde Wasser aus den Sammelrinnen ab.

Besonders gute Ergebnisse werden erzielt, wenn die Abscheiderlamellen um etwa 40° bis 50° geneigt sind und die Breite jeder Sammelrinne etwa 1/2 bis 1/3 der Breite einer Baugruppe entspricht. Durch diese Maßnahmen wird eine besonders gute Abscheidung während des normalen Betriebes erreicht, und in Verbindung mit der Breite der Sammelrinnen weist die Schleuderbahn für die Tropfen in die jeweils benachbarte Sammelrinne.

Das Strömungsrohr kann in einer oder in mehreren Querschnittsebenen mit einem Abscheider ausgerüstet sein, wobei jeder Abscheider aus einer Vielzahl mit Abscheiderlamellen versehenen Baugruppen besteht. Die Neigungsrichtung der Abscheiderelemente richtet sich nach der Ausbildung und Anordnung der Sammelrinnen Zweckmäßig sind alle Abscheiderlamellen einer Baugruppenebene in die gleiche Richtung geneigt. Dabei können die Sammelrinnen von den Trägerplatten nebeneinanderliegender Reihen Abscheiderlamellen begrenzt sein, wodurch ein besonders einfacher und platzsparender Aufbau erzielt wird. Für eine einfache Montage der Baugruppen ist jede Baugruppe zweckmäßig mit Kupplungsrohren und aneinanderkuppelbaren Spülrohren versehen. Dabei kann im Strömungsrohr eine zur Horizontalebene leicht geneigte Querwand mit Ausschnitten zum Einsetzen der Baugruppen vorgesehen sein; diese Ausführung ermöglicht eine einfache Vormontage der Abscheider, die dann lediglich noch mit der vorgesehenen leichten Neigung in das Strömungsrohr eingebaut zu werden brauchen. Alternativ können die Abscheiderlamellen von jeweils zwei benachbarten Reihen auch satteldachförmig angeordnet sein.

Die Erfindung ist in der Zeichnung in mehreren Ausführungen dargestellt; es zeigt:

Fig. 1        einen Längsschnitt durch einen mit Tropfenabscheidern ausgerüsteten Gaswäscher,

Fig. 2        einen Abschnitt eines der in Fig. 1 enthaltenen Tropfenabscheiders in einem größeren Maßstab,

Fig. 3        eine Draufsicht auf einen Tropfenabscheider der Fig. 1 in einem größeren Maßstab,

Fig. 4 bis 6        verschiedene Querschnittsformen von Abscheiderlamellen,

Fig. 7        zwei Baugruppen eines Tropfenabscheiders in einer Seitenansicht,

Fig. 8        eine Baugruppe aus Fig. 7 in einer Stirnansicht und

Fig. 9        ein weiteres Ausführungsbeispiel mit satteldachförmig angeordneten Abscheiderlamellen.

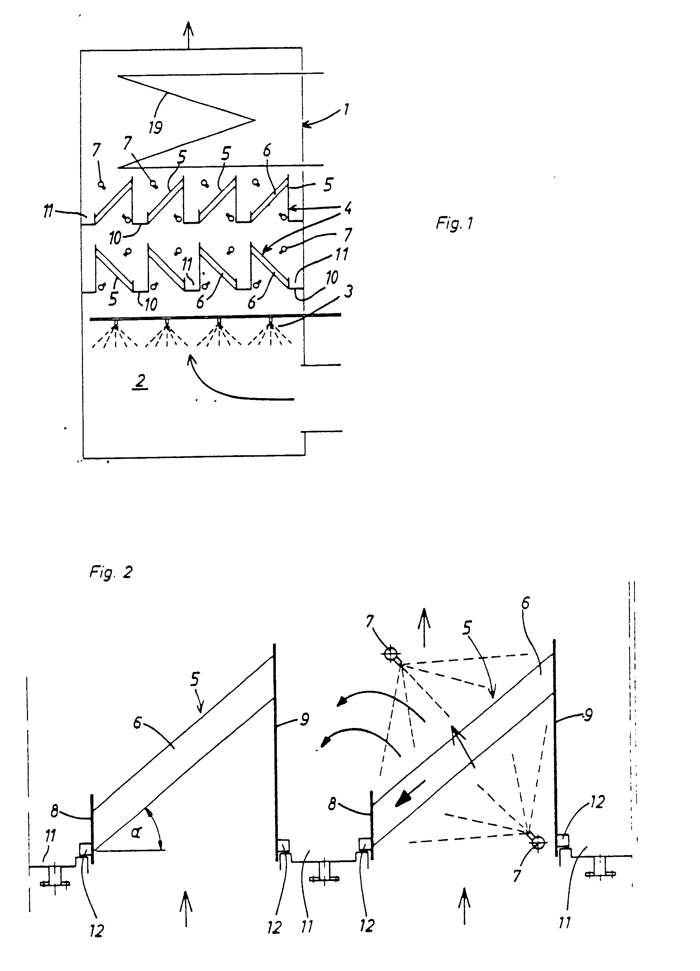

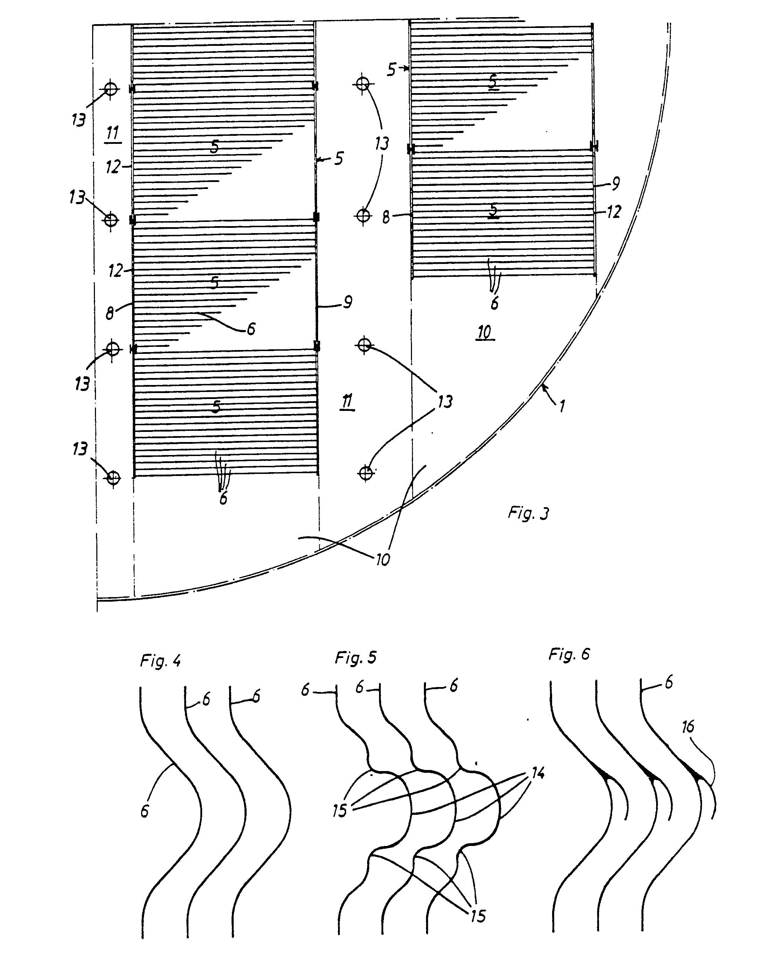

Bei der in Fig gezeigten Ausführung bildet ein Gaswäscher 1 ein lotrechtes Strömungsrohr, bei dem ein Gas, z. B. staubhaltiges Rauchgas der Rauchgasentschwefelungsanlage eines Kraftwerkes, eine mit einer Sprüheinrichtung 3 ausgerüstete Waschzone 2 und dann von unten nach oben zwei übereinander angeordnete Tropfenabscheider 4 sowie einen der Gasvorwärmung dienenden Wärmetauscher 19 durchströmt. Jeder Tropfenabscheider 4 besteht aus baugruppenartig zusammengefaßten Abscheiderlamellen 6. Die Fig. 2 und 3 zeigen, daß jede Baugruppe 5 aus einer Vielzahl Abscheiderlamellen 6 besteht, die mit Abstand zueinander und mit einer gleichen Neigung mit ihren Enden an zwei Trägerplatten 8, 9 befestigt sind. Der Neigungswinkel α beträgt beispielsweise 45° und die Trägerplatten 8, 9 ragen bis knapp über die Oberkante der Abscheiderlamellen 6, so daß eine niedrige Trägerplatte 8 und eine hohe Trägerplatte 9 die Abscheiderlamellen 6 einfaßt. An den Trägerplatten 8, 9 sind im Querschnitt quadratische Kupplungsrohre 12 angebracht, welche die Zusammenstellung der Baugruppen 5 zu einem Tropfenabscheider 4 in Verbindung mit einem Traggerüst oder einer Querwand 10 erlaubt. Diese Querwand 10 ist mit Ausschnitten versehen, in welche die Baugruppen 5 einsetzbar sind, wobei sie mit den seitlichen Kupplungsrohren 12 auf den seitlichen Rändern der Ausschnitte aufliegen. Die zwischen den Ausschnitten vorhandenen Stege bilden in Verbindung mit den zugehörigen Trägerplatten 8, 9 eine Sammelrinne 11. Um einen Ablauf zu ermöglichen, ist die Querwand 10 in Längsrichtung der Sammelrinnen 11 um etwa 2 bis 30° geneigt; bedarfsweise können auch Ablaufbohrungen 13 im Boden vorgesehen sein. Im zusammengesetzten Zustand besteht jeder Tropfenabscheider 4 aus mehreren Reihen Abscheiderlamellen 6, die jeweils in die gleiche Richtung geneigt sind. Außerdem ist jede Reihe über und unter den Abscheiderlamellen 6 mit je einem Spülrohr 7 versehen.

Die Abscheiderlamellen 6 können in Abhängigkeit von dem einwirkenden Tropfenspektrum und der Strömungsgeschwindigkeit gewellt sein. Fig. 4 zeigt eine Ausführung mit einer einfachen Wellung. Bei der Ausführung nach Fig. 5 sind neben der stärker ausgewölbten mittleren Welle 14 zwei in die Gegenrichtung ausgewölbte kleinere Wellen 15 vorgesehen. Bei der Ausführung nach Fig. 6 ist auf der Welle eine nach unten weisende Fangnase 16 angeformt.

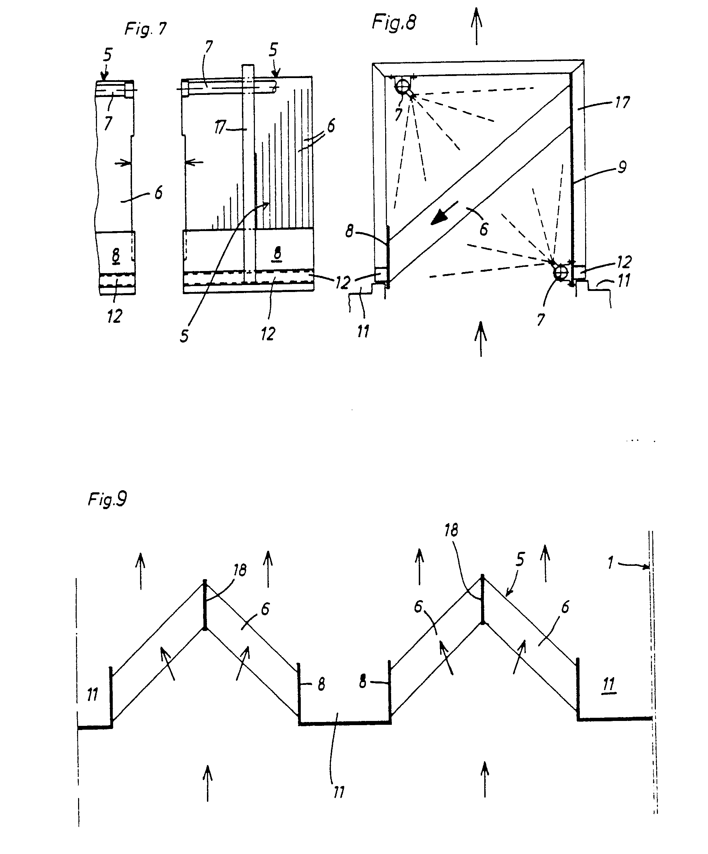

Für eine baugruppenartige Verbindung kann jeder Baugruppe 5 ein kurzes Kupplungsrohr 12 zugeordnet sein, das mit dem Kupplungsrohr 12 der anschließenden Baugruppe 5 zusammensteckbar ist. Ebenfalls können, wie die Fig. 7 und 8 zeigen, kurze Spülrohre 7 an einem Trägerbügel 17 bzw. der Trägerplatte 9 befestigt sein, die desgleichen aneinanderkuppelbar sind.

Während des Normalbetriebes scheiden sich die vom Gasstrom mitgerissenen Tröpfchen an den gewellten Abscheiderlamellen 6 ab. Die abgeschiedene Flüssigkeit strömt auf den Abscheiderlamellen 6 schräg nach unten und tropft dort an der niedrigeren Trägerplatte 8 nach unten in die Waschzone 2. Um etwa auf den Abscheiderlamellen 6 abgesetzte Staubteilchen, z. B. Kalkstaub einer vorgeschalteten Rauchgasentschwefelungsanlage, zu entfernen, wird in geeigneten Zeitabständen periodisch durch die Spülrohre 7 Spülwasser gegen die Abscheiderlamellen 6 gespritzt, wobei jedoch die normale Gasströmung aufrechterhalten bleibt. Dabei wird Spülflüssigkeit mitgerissen und hochgeschleudert, jedoch durch die Neigung der Abscheiderlamellen 6 schräg in Richtung zur zugehörigen Sammelrinne 11, in welche die Tropfen fallen (vgl. Pfeile in Fig. 2). Die große Trägerplatte 9 verhindert einen Übertritt der Tropfen zur benachbarten Reihe.

Bei der in Fig. 9 dargestellten Ausführung sind Abscheiderlamellen 6 von jeweils zwei benachbarten Reihen satteldachförmig angeordnet, bzw. jede Reihe wird aus satteldachförmig ausgebildeten Baugruppen 5 aufgebaut, bei denen die Abscheiderlamellen 6 im First an einer Trägerplatte 18 befestigt sind.

**Patentansprüche**

1. Vorrichtung zum Abscheiden von Flüssigkeitstropfen aus dem Gasstrom eines lotrechten Strömungsrohres, insbesondere eines Gaswäschers (1) von Rauchgasentschwefelungsanlagen, bestehend aus baugruppenartig zusammengefaßten Abscheiderlamellen (6), die an einem Rahmen zwischen zwei Trägerplatten (8, 9) parallel und mit Abstand voneinander schräg im Strömungsrohr angebracht sind und wobei die Baugruppen (5) in mehreren parallelen Reihen angeordnet und mit Spülrohren (7) versehen sind, dadurch gekennzeichnet, daß neben den unteren Enden der gewellt ausgebildeten Abscheiderlamellen (6) je eine leicht geneigte Sammelrinne (11) vorgesehen ist.

2. Vorrichtung nach Anspruch 1, dadurch gekennzeichnet, daß die Abscheiderlamellen (6) um etwa 40° bis 50° geneigt sind und die Breite jeder Sammelrinne (11) etwa 1/2 bis 1/3 der Breite einer Baugruppe (5) entspricht.

3. Vorrichtung nach Anspruch 1 oder 2, dadurch gekennzeichnet, daß alle Abscheiderlamellen (6) einer Baugruppenebene in die gleiche Richtung geneigt sind.

4. Vorrichtung nach Anspruch 3, dadurch gekennzeichnet, daß die Sammelrinnen (11) von den Trägerplatten (8, 9) nebeneinanderliegender Reihen Abscheiderlamellen (6) begrenzt werden.

5. Vorrichtung nach einem der Ansprüche 1 bis 4, dadurch gekennzeichnet, daß jede Baugruppe (5) mit Kupplungsrohren (12) und aneinanderkuppelbaren Spülrohren (7) versehen ist.

6. Vorrichtung nach einem der Ansprüche 1 bis 5, dadurch gekennzeichnet, daß im Strömungsrohr eine zur Horizontalebene leicht geneigte Querwand (10) mit Ausschnitten zum Einsetzen der Baugruppen (5) vorgesehen ist.

7. Vorrichtung nach Anspruch 1 oder 2, dadurch gekennzeichnet, daß die Abscheiderlamellen (6) von jeweils zwei benachbarten Reihen satteldachförmig angeordnet sind.

8. Vorrichtung nach einem der Ansprüche 1 bis 7, dadurch gekennzeichnet, daß die Abscheiderlamellen (6) mit Fangnasen (16) oder Fangrinnen versehen sind.


## Claims

1. Apparatus for separating liquid droplets from the gas flow inside a vertical pipe, more particularly in a gas washing plant (1) in flue gas desulphurization installations, comprising separator slats (6) arranged in groups and disposed obliquely in parallel and spaced relationship in the pipe on a frame between two carrier plates (8, 9), the groups (5) being disposed in a number of parallel rows and being provided with rinsing tubes (7), characterized in that a slightly inclined collecting tray (11) is provided next to each of the bottom ends of the corrugated separator slats (6).

2. Apparatus according to claim 1, characterized in that the separator slats (6) are inclined by about 40° to 50° and the width of each collecting tray (11) is about one-half to one-third of the width of a group (5).

3. Apparatus according to claim 1 or 2, characterized in that all the separator slats (6) of a group plane are inclined in the same direction.

4. Apparatus according to claim 3, characterized in that the collecting trays (11) are bounded by the carrier plates (8, 9) of adjacent rows of separator slats (6).

5. Apparatus according to any one of claims 1 to 4, characterized in that each group (5) is provided with coupling tubes (12) and rinsing tubes (7) which are adapted to be coupled together.

6. Apparatus according to any one of claims 1 to 5, characterized in that a partition (10) with cutouts for insertion of the groups (5) is provided in the flow pipe, said partition being slightly inclined to the horizontal plane.

7. Apparatus according to claim 1 or 2, characterized in that the separator slats (6) of each pair of adjacent rows are arranged in a form of a ridge roof.

8. Apparatus according to any one of claims 1 to 7, characterized in that the separator slats (6) are provided with catch noses (16) or catch trays.


## Revendications

1. Dispositif pour séparer des gouttes de liquide d'un écoulement gazeux dans un conduit vertical, notamment d'un laveur de gaz (1) d'installations de désulfuration de gaz de fumée, constitué de lamelles de séparateur (6) rassemblées en des groupes et montées, inclinées dans le conduit d'écoulement, sur un cadre entre deux plaques-supports (8, 9), en étant parallèles et à distance les unes des autres, les groupes (5) étant disposés en plusieurs rangées parallèles et munis de tuyaux de lavage (7), caractérisé en ce qu'une goulotte collectrice (11) inclinée légèrement est prévue à côté de l'extrémité inférieure de chaque lamelle de séparateur (6), qui est ondulée.

2. Dispositif suivant la revendication 1, caractérisé en ce que les lamelles de séparateur (6) sont inclinées de 40° à 50° environ et la largeur de chaque goulotte collectrice (11) est comprise entre la moitié et le tiers environ de la largeur d'un groupe (5).

3. Dispositif suivant la revendication 1 ou 2, caractérisé en ce que toutes les lamelles de séparateur (6) d'un plan de groupe sont inclinées dans la même direction.

4. Dispositif suivant la revendication 3, caractérisé en ce que les goulottes collectrices (11) sont délimitées par les plaques-supports (8, 9) de rangées, disposées côte à côte, de lamelles de séparateur (6).

5. Dispositif suivant l'une des revendications 1 à 4, caractérisé en ce que chaque groupe (5) est muni de tuyaux d'accouplement (12) et de tuyaux de lavage (7) qui peuvent être accouplés.

6. Dispositif suivant l'une des revendications 1 à 5, caractérisé en ce que, dans le conduit d'écoulement, est prévue une cloison transversale (10), légèrement inclinée par rapport au plan horizontal et ayant des parties découpées pour l'insertion des groupes (5).

7. Dispositif suivant la revendication 1 ou 2, caractérisé en ce que les lamelles de séparateur (6) de deux rangées voisines sont disposées en forme de selles.

8. Dispositif suivant l'une des revendications 1 à 7, caractérisé en ce que les lamelles de séparateur (6) sont munies de becs de captage (16) ou de goulottes de captage.

Fig. 1

Fig. 2

Fig. 3

Fig. 4

Fig. 5

Fig. 6

Fig. 7

Fig.8

Fig.9